# EUROPEAN PATENT APPLICATION

(11) **EP 4 776 469 A1**
(43) Date of publication of application: **15.07.2026**
(21) Application number: 26151368.3
(22) Date of filing: 12.01.2026
(51) Int. Cl.: H02J 7/02, H02J 7/34, H02J 7/50

(54) **CHARGING DEVICE**

(30) Priority: 13.01.2025 CN 202510051568; 13.02.2025 CN 202510162864
(71) Applicant: Huawei Technologies Co., Ltd., Shenzhen, Guangdong 518129 (CN)
(72) Inventor: LI, Fei, Shenzhen 518129 (CN); CAI, Yi, Shenzhen 518129 (CN); MIAO, Zhengping, Shenzhen 518129 (CN); YU, Kun, Shenzhen 518129 (CN)
(74) Representative: Gill Jennings & Every LLP

(57) **Abstract**

Embodiments of this application provide a charging device. The charging device includes one or more bidirectional AC-DC circuits, one or more unidirectional AC-DC circuits, a plurality of unidirectional DC-DC circuits, and one or more charging connectors. Each AC-DC circuit of the one or more bidirectional AC-DC circuits and the one or more unidirectional AC-DC circuits includes an input capacitor, and each AC-DC circuit is configured to connect to a same alternating current source through the input capacitor. The charging device is configured to: when none of the charging connectors is connected to an electric vehicle, control the one or more unidirectional AC-DC circuits and the plurality of unidirectional DC-DC circuits not to work, and control at least one of the one or more bidirectional AC-DC circuits to work.

## Description

### TECHNICAL FIELD

This application relates to the field of charging, and more specifically, to a charging device.

### BACKGROUND

With rapid popularization of electric vehicles, charging devices used as supporting facilities have become increasingly widespread. The charging device includes an alternating current-direct current AC-DC circuit. The AC-DC circuit includes an input capacitor, and is connected to a power grid through the input capacitor. However, in the foregoing design, when the charging device is in a standby state, the input capacitor is still connected to the power grid, resulting in a large reactive power loss of the charging device in the standby state.

To resolve the foregoing problem, in a related technical solution, an additional reactive power compensation device is disposed to compensate for the reactive power loss of the charging device. However, this technical solution causes a large size and high costs of the charging device.

### SUMMARY

This application provides a charging device, to reduce a reactive power loss of the charging device in a standby state without an additional reactive power compensation device, so that a size and costs of the charging device can be reduced.

According to a first aspect, an embodiment of this application provides a charging device, including one or more bidirectional AC-DC circuits, one or more unidirectional AC-DC circuits, a plurality of unidirectional DC-DC circuits, and one or more charging connectors. Each AC-DC circuit of the one or more bidirectional AC-DC circuits and the one or more unidirectional AC-DC circuits includes an input capacitor. Each AC-DC circuit is configured to connect to a same alternating current source through the input capacitor. Each of the one or more charging connectors is configured to connect to an electric vehicle. Each of the plurality of unidirectional DC-DC circuits is configured to: perform power conversion on a direct current output from at least one AC-DC circuit of the one or more bidirectional AC-DC circuits and the one or more unidirectional AC-DC circuits, and output the converted direct current to one of the one or more charging connectors. The charging device is configured to: when none of the charging connectors is connected to the electric vehicle, control the one or more unidirectional AC-DC circuits and the plurality of unidirectional DC-DC circuits not to work, and control at least one of the one or more bidirectional AC-DC circuits to work.

When the charging device does not need to charge the electric vehicle, the charging device enters a standby state. In the standby state, the input capacitor of each AC-DC circuit can exchange energy with the alternating current source, causing a reactive power loss. In the technical solution of this application, at least one of the one or more bidirectional AC-DC circuits is controlled to work, so that an inductor in the at least one bidirectional AC-DC circuit that works exchanges energy with the input capacitor. This reduces energy exchange between the input capacitor and the alternating current source, and further reduces the reactive power loss of the charging device.

In the technical solution of this application, no additional reactive power compensation device is required, and a reactive power compensation function can be implemented only by disposing at least one bidirectional AC-DC circuit. This can greatly reduce a size and costs of the charging device.

In addition, according to the technical solution of this application, when charging the electric vehicle, the charging device may further convert, by using the bidirectional AC-DC circuit, an alternating current input by the alternating current source into a direct current to charge the electric vehicle, so that complexity of a circuit in the charging device can be reduced.

In addition, in the technical solution of this application, the bidirectional AC-DC circuit is connected to the unidirectional DC-DC circuit instead of a bidirectional DC-DC circuit, so that the costs of the charging device can be further reduced.

In an embodiment of this application, each AC-DC circuit is correspondingly connected to one controller, a controller connected to one of the one or more bidirectional AC-DC circuits is configured to control at least one of the one or more bidirectional AC-DC circuits to work, and the controller connected to the one of the bidirectional AC-DC circuits is further configured to receive a power parameter, where the power parameter includes at least one of the following: a reactive power of each AC-DC circuit of the one or more bidirectional AC-DC circuits except the one of the bidirectional AC-DC circuits, an input voltage and an input current of each AC-DC circuit of the one or more bidirectional AC-DC circuits except the one of the bidirectional AC-DC circuits, a reactive power of an alternating current input into the charging device, an input voltage of the one of the bidirectional AC-DC circuits, and a sum of input currents of all the AC-DC circuits.

Generally, the charging device includes a main controller. The main controller sends a control command to the controller connected to the AC-DC circuit, and the controller connected to the AC-DC circuit controls, according to the control command, the AC-DC circuit to work. The controller connected to the one of the bidirectional AC-DC circuits is used to receive the power parameter and perform reactive power compensation, so that complexity of cooperation between the main controller and the controller connected to each AC-DC circuit can be reduced. In addition, the AC-DC circuit is generally integrated in an AC-DC module. If reactive power compensation control is performed by the main controller, subsequent commissioning needs to be performed between the controller (that is, the controller connected to the AC-DC circuit) in the AC-DC module and the main controller after delivery of the AC-DC module. This increases integration complexity and development costs of the charging device. According to the solution in this embodiment, a reactive power compensation function may be commissioned before delivery of the AC-DC module, so that the integration complexity and the development costs of the charging device are reduced.

In an embodiment of this application, the charging device further includes a main controller and a communication bus. The main controller is connected to the controller connected to each AC-DC circuit through the communication bus, the controller connected to each AC-DC circuit communicates with the main controller through the communication bus, and the controllers of the AC-DC circuits further communicate with each other through the communication bus.

Generally, the charging device includes a main controller. The main controller communicates with the controller connected to each AC-DC circuit through the communication bus. The main controller sends, based on charging information of the electric vehicle, a control command to the controller connected to the AC-DC circuit, and the controller connected to the AC-DC circuit controls, according to the control command, the AC-DC circuit to work, to charge the electric vehicle. The controllers connected to the AC-DC circuits can communicate with each other through the communication bus, so that circuit complexity of the charging device can be reduced.

In an embodiment of this application, the charging device further includes a reactive power monitoring apparatus, and the reactive power monitoring apparatus is configured to monitor the reactive power of the alternating current input into the charging device.

An implementation of detecting, by using the reactive power monitoring apparatus, the reactive power of the alternating current input into the charging device is simple, so that the integration complexity of the charging device can be reduced.

In an embodiment of this application, the charging device further includes a current monitoring apparatus and a voltage monitoring apparatus. The voltage monitoring apparatus is configured to monitor the input voltage of the one of the bidirectional AC-DC circuits, and the current monitoring apparatus is configured to monitor the sum of the input currents of all the AC-DC circuits.

Each AC-DC circuit is connected to the same alternating current source. Therefore, the input voltage of the one of the bidirectional AC-DC circuits is an input voltage of the charging device. The sum of the input currents of all the AC-DC circuits and the input voltage of the one of the bidirectional AC-DC circuits are detected, so that the reactive power loss of the charging device may be calculated. This implementation has low costs.

In an embodiment of this application, the charging device is further configured to: when the charging connector outputs a charging current, and a power factor of the charging device is less than a first preset value, adjust a frequency or a duty cycle of a switching transistor of at least one of bidirectional AC-DC circuits that are working, or control at least one of bidirectional AC-DC circuits that are not working to work, where Power factor of the charging device = Active power of the charging device/Apparent power of the charging device.

In an embodiment of this application, the first preset value is greater than or equal to 0.9 and less than or equal to 0.95. That is, the first preset value may be any value that ranges from 0.9 to 0.95.

When the charging device charges the electric vehicle, the bidirectional AC-DC circuit may be further configured to increase the power factor of the charging device, thereby improving power utilization of the charging device.

In an embodiment of this application, the charging device is configured to: when none of the charging connectors is connected to the electric vehicle, and the reactive power of the charging device is greater than a second preset value, control the one or more unidirectional AC-DC circuits and the plurality of unidirectional DC-DC circuits not to work, and control at least one of the one or more bidirectional AC-DC circuits to work.

In an embodiment of this application, the second preset value is greater than or equal to 500 VA and less than or equal to 1000 VA. That is, the second preset value may be any value that ranges from 500 VA to 1000 VA.

When the charging device is in the standby state, and the reactive power of the charging device is greater than the second preset value, the bidirectional AC-DC circuit enables the reactive power compensation function. This can reduce working duration of the bidirectional AC-DC circuit, thereby facilitating long-term running of the bidirectional AC-DC circuit.

In an embodiment of this application, the charging device includes a plurality of groups of input terminals and a plurality of groups of power conversion circuits. Each group of power conversion circuits includes the one or more bidirectional AC-DC circuits, the one or more unidirectional AC-DC circuits, and the plurality of unidirectional DC-DC circuits. The plurality of groups of input terminals are configured to connect to the same alternating current source, and the plurality of groups of input terminals are connected to the plurality of groups of power conversion circuits in a one-to-one correspondence.

Each group of power conversion circuits may implement a reactive power compensation function for a reactive power loss of the group of power conversion circuits. In this way, specification requirements for a device that is in the charging device and that monitors the power parameter may be low, further reducing the costs of the charging device.

In an embodiment of this application, the charging device further includes a direct current bus, and each AC-DC circuit is connected to each unidirectional DC-DC circuit through the direct current bus.

When each AC-DC circuit is connected to each unidirectional DC-DC circuit through the direct current bus, at least one AC-DC circuit may be packaged in one AC-DC module, and at least one unidirectional DC-DC circuit may be packaged in one unidirectional DC-DC module.

### BRIEF DESCRIPTION OF DRAWINGS

FIG. 1 is a diagram of a charging system according to an embodiment of this application;
FIG. 2 is a diagram of an example of a specific structure of the charging device shown in FIG. 1 according to an embodiment of this application;
FIG. 3 is a diagram of a structure of a charging device according to an embodiment of this application;
FIG. 4 is a diagram of another structure of a charging device according to this application;
FIG. 5 is a diagram of still another structure of a charging device according to this application;
FIG. 6 is a diagram of yet another structure of a charging device according to an embodiment of this application; and
FIG. 7 is a diagram of still yet another structure of a charging device according to an embodiment of this application.

### DESCRIPTION OF EMBODIMENTS

For ease of understanding embodiments of this application, before embodiments of this application are described, the following descriptions are first provided.

In the descriptions of embodiments of this application, a connection may be an electrical connection. The electrical connection may be understood as that signal transmission is implemented between two electrical elements through a direct electrical connection or an indirect electrical connection. For example, that A is electrically connected to B may be understood as that A is directly electrically connected to B, or may be understood as that A is indirectly electrically connected to B via one or more other electrical elements.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In addition, in the descriptions of embodiments of this application, "a plurality of" means two or more, and "at least one" and "one or more" mean one, two, or more.

The following describes technical solutions of this application with reference to accompanying drawings.

First, for ease of understanding the technical solutions provided in embodiments of this application, an application scenario to which embodiments of this application are applicable is first described.

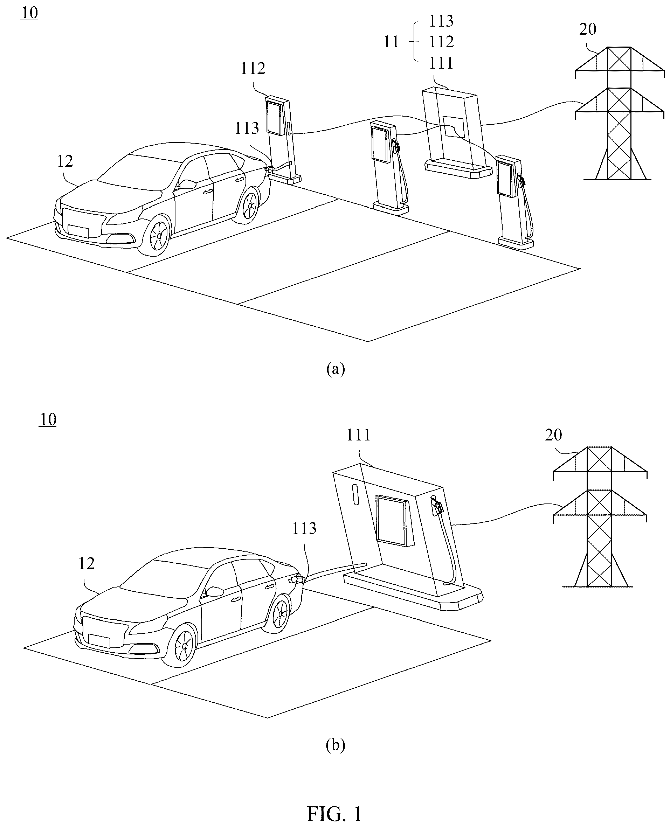

FIG. 1 is a diagram of a charging system according to an embodiment of this application.

With reference to (a) and (b) in FIG. 1, the charging system 10 includes a charging device 11 and an electric vehicle 12. The charging device 11 is configured to: receive an alternating current output by a power grid 20, convert the alternating current into a stable direct current, and then transmit the stable direct current to the electric vehicle 12, to charge the electric vehicle 12. Alternatively, in some other embodiments, the electric vehicle 12 may reversely output electric energy to the power grid 20 by using the charging device 11.

In some embodiments, as shown in (a) in FIG. 1, the charging device 11 is a split charging device. Specifically, the charging device 11 includes a charging power unit 111, one or more charging terminals 112, and one or more charging connectors 113.

The charging power unit 111 includes a plurality of charging modules (not shown in the figure), and output ends of the plurality of charging modules are connected to each charging terminal 112. The plurality of charging modules are configured to: convert the alternating current output by the power grid 20 into the stable direct current, and then transmit the stable direct current to the charging terminal 112. The plurality of charging modules include, for example, an AC-DC charging module and a DC-DC charging module. Specific descriptions of the AC-DC charging module and the DC-DC charging module are described below. Details are not described herein.

Each charging terminal 112 is connected to at least one of the one or more charging connectors 113, and each charging connector 113 is configured to connect to the electric vehicle 12. One electric vehicle 12 may be connected to one or more charging connectors 113. During specific implementation, the charging terminal 112 is configured to transmit the direct current output by the plurality of charging modules to the electric vehicle 12 by using the connected charging connector 113.

It should be understood that, in this embodiment of this application, the charging terminal 112 includes a housing, a human-computer interaction interface, a charging control unit, a metering and billing unit, and the like, to perform information exchange, energy transmission, metering and billing, and the like with the electric vehicle 12.

It should be further understood that, in this embodiment of this application, the electric vehicle 12 is a transportation tool driven by electric energy. The electric vehicle 12 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 11 is an integrated charging device. Specifically, in the charging device 11, a human-computer interaction interface, a charging control unit, a metering and billing unit, and the like are directly disposed in a charging power unit 111, so that the charging device 11 may include the charging power unit 111 and a charging connector 113 connected to the charging power unit 111, but does not include a charging terminal 112. During specific implementation, a plurality of charging modules in the charging power unit 111 convert the alternating current output by the power grid 20 into the stable direct current, and then directly transmit the stable direct current to the electric vehicle 12 by using the charging connector 113.

The following further describes a connection relationship of a circuit in the charging device 11 by using the charging device 11 in (a) in FIG. 1 as an example.

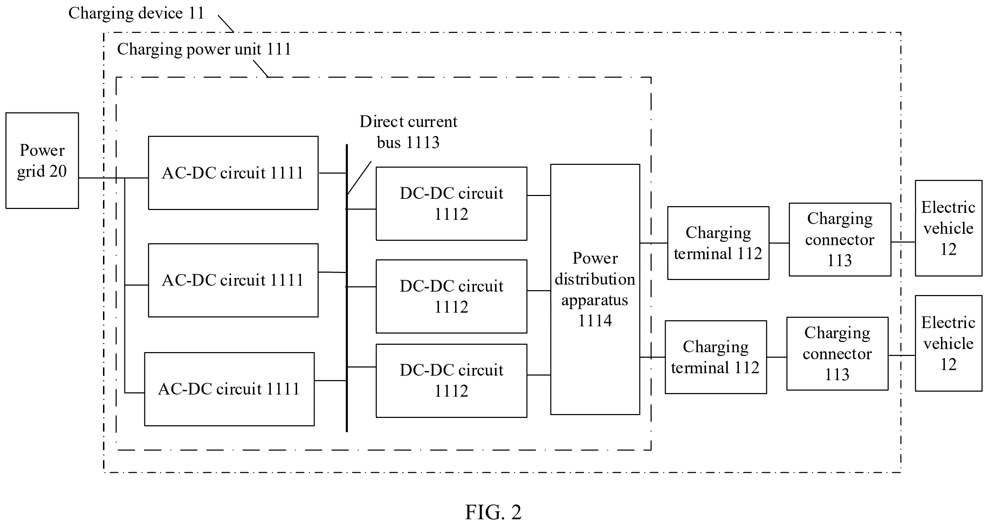

FIG. 2 is a diagram of an example of a specific structure of the charging device shown in FIG. 1 according to an embodiment of this application.

Refer to FIG. 2. The charging power unit 111 includes one or more AC-DC circuits 1111, one or more DC-DC circuits 1112, a direct current bus 1113, and a power distribution apparatus 1114. For example, FIG. 2 shows an example in which the charging power unit 111 includes a plurality of AC-DC circuits 1111 and a plurality of DC-DC circuits 1112. An input end of each AC-DC circuit 1111 is connected to the power grid 20, and an output end of each AC-DC circuit 1111 is connected to an input end of each DC-DC circuit 1112 through the direct current bus 1113. An output end of each DC-DC circuit 1112 is connected to each charging terminal 112 in the charging device 11 through the power distribution apparatus 1114, and each charging terminal 112 is connected to the charging connector 113.

During specific implementation, each AC-DC circuit 1111 is configured to: convert the alternating current output by the power grid 20 into a direct current, and output the direct current to the direct current bus 1113. Each DC-DC circuit 1112 is configured to: further convert the direct current obtained from the direct current bus 1113 into a direct current applicable to the electric vehicle 12, and then output the direct current to the power distribution apparatus 1114. The power distribution apparatus 1114 is configured to: dynamically distribute, based on a charging power actually required by the electric vehicle 12, the direct current output by each DC-DC circuit 1112, and transmit the distributed power to the charging connector 113 by using the charging terminal 112, so that a power output by the charging connector 113 to the electric vehicle 12 meets a charging requirement of the electric vehicle 12.

As described in the foregoing background, the AC-DC circuit 1111 is connected to the power grid through an input capacitor. When the charging device 11 is in a standby state, the input capacitor is still connected to the power grid, resulting in a large reactive power loss of the charging device 11 in the standby state. In a related technical solution, an additional reactive power compensation device is disposed to compensate for the reactive power loss of the charging device 11. However, this technical solution causes a large size and high costs of the charging device 11.

Based on the foregoing content, an embodiment of this application provides a charging device, to reduce a reactive power loss of the charging device in a standby state without an additional reactive power compensation device, so that a size and costs of the charging device can be reduced.

The following describes the charging device provided in this embodiment of this application with reference to the accompanying drawings.

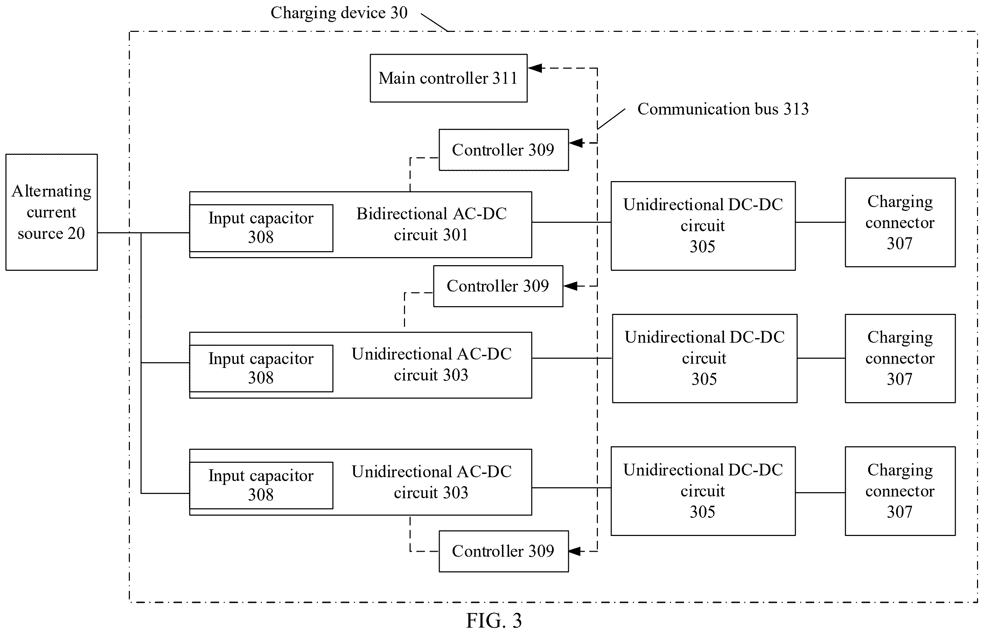

FIG. 3 is a diagram of a structure of a charging device according to an embodiment of this application. The charging device 30 includes one or more bidirectional AC-DC circuits 301 (one bidirectional AC-DC circuit is used as an example in the figure), one or more unidirectional AC-DC circuits 303 (two unidirectional AC-DC circuits are used as an example in the figure), a plurality of unidirectional DC-DC circuits 305, and one or more charging connectors 307.

Each AC-DC circuit of the one or more bidirectional AC-DC circuits 301 and the one or more unidirectional AC-DC circuits 303 includes an input capacitor, and each AC-DC circuit is configured to connect to a same alternating current source through the input capacitor 308. Each of the one or more charging connectors 307 is configured to connect to an electric vehicle. Each of the plurality of unidirectional DC-DC circuits 305 is configured to: perform power conversion on a direct current output from at least one AC-DC circuit of the one or more bidirectional AC-DC circuits 301 and the one or more unidirectional AC-DC circuits 303, and output the converted direct current to one of the one or more charging connectors 307.

The charging device 30 is configured to: when none of the charging connectors 307 is connected to the electric vehicle, control the one or more unidirectional AC-DC circuits 303 and the plurality of unidirectional DC-DC circuits 305 not to work, and control at least one of the one or more bidirectional AC-DC circuits 301 to work.

When the charging device 30 does not need to charge the electric vehicle, the charging device 30 enters a standby state. In the standby state, the input capacitor 308 of each AC-DC circuit of the one or more bidirectional AC-DC circuits 301 and the one or more unidirectional AC-DC circuits 303 can exchange energy with the alternating current source 20, causing a reactive power loss. In the technical solution of this application, the charging device 30 controls at least one of the one or more bidirectional AC-DC circuits 301 to work, so that an inductor in the at least one bidirectional AC-DC circuit 301 that works exchanges energy with the correspondingly connected input capacitor 308. This reduces energy exchange between the input capacitor 308 and the alternating current source 20, that is, reduces a reactive power requirement of the input capacitor 308 for the alternating current source 20, and further reduces the reactive power loss of the charging device 30.

In the technical solution of this application, no additional reactive power compensation device is required, and a reactive power compensation function can be implemented only by disposing at least one bidirectional AC-DC circuit in the charging device 30. This can greatly reduce a size and costs of the charging device 30.

In addition, according to the technical solution of this application, when charging the electric vehicle, the charging device 30 may further convert, by using the bidirectional AC-DC circuit 301, an alternating current input by the alternating current source 20 into a direct current to charge the electric vehicle, so that complexity of a circuit in the charging device 30 can be reduced.

In addition, in the technical solution of this application, the bidirectional AC-DC circuit 301 is connected to the unidirectional DC-DC circuit 305 instead of a bidirectional DC-DC circuit, so that the costs of the charging device 30 can be further reduced.

In an embodiment, a minimum number of bidirectional AC-DC modules required by the charging device 30 may be configured based on a maximum reactive power loss generated by all the unidirectional AC-DC circuits 303 and a reactive power compensation capability of each bidirectional AC-DC circuit 301 in the charging device 30, to further reduce the costs of the charging device 30.

It may be understood that, in FIG. 3, an example in which the bidirectional AC-DC circuit 301 is connected to the unidirectional DC-DC circuit 305 in a one-to-one correspondence, and the unidirectional DC-DC circuit 305 is connected to the charging connector 307 in a one-to-one correspondence is used. In the solution of this application, a connection relationship between the bidirectional AC-DC circuit 301 and the unidirectional DC-DC circuit 305 and a connection relationship between the unidirectional DC-DC circuit 305 and the charging connector 307 are not limited. For example, one bidirectional AC-DC circuit 301 may be connected to two unidirectional DC-DC circuits 305, and two unidirectional DC-DC circuits 305 may be connected to one charging connector 307.

In an embodiment, the charging device 30 is configured to: when none of the charging connectors 307 is connected to the electric vehicle, and a reactive power of the charging device 30 is greater than a second preset value, control the one or more unidirectional AC-DC circuits 303 and the plurality of unidirectional DC-DC circuits 305 not to work, and control at least one of the one or more bidirectional AC-DC circuits 301 to work.

When the charging device 30 is in the standby state, and the reactive power of the charging device 30 is greater than the second preset value, the bidirectional AC-DC circuit 301 enables the reactive power compensation function. This can reduce working duration of the bidirectional AC-DC circuit 301, thereby facilitating long-term running of the bidirectional AC-DC circuit.

In an embodiment, the second preset value is greater than or equal to 500 VA and less than or equal to 1000 VA. That is, the second preset value may be any value that ranges from 500 VA to 1000 VA.

In an embodiment, the charging device 30 is further configured to: when the charging connector 307 outputs a charging current, and a power factor of the charging device 30 is less than a first preset value, adjust a frequency or a duty cycle of a switching transistor of at least one of bidirectional AC-DC circuits 301 that are working, or control at least one of bidirectional AC-DC circuits 301 that are not working to work, where Power factor of the charging device 30 = Active power of the charging device 30/Apparent power of the charging device 30.

In an embodiment, the first preset value is greater than or equal to 0.9 and less than or equal to 0.95. That is, the first preset value may be any value that ranges from 0.9 to 0.95.

When the charging device 30 charges the electric vehicle, and the power factor of the charging device 30 is less than the first preset value, it indicates that power utilization of the charging device 30 is low, and a working state of the bidirectional AC-DC circuit 301 may be changed to improve the power utilization of the charging device 30.

Specifically, it is assumed that the active power of the charging device 30 is A, the reactive power of the charging device 30 is B, and the apparent power of the charging device 30 is C. A relationship among the three values is: *A*² + *B*² = *C*² Therefore, the reactive power of the charging device 30 is changed, so that the apparent power of the charging device 30 may be changed, allowing the power factor of the charging device 30 to be changed.

Therefore, the frequency or the duty cycle of the switching transistor of the at least one of the bidirectional AC-DC circuits 301 that are working is adjusted, or the at least one of the bidirectional AC-DC circuits 301 that are not working is controlled to work, so that the reactive power of the charging device 30 may be changed, allowing the power factor of the charging device 30 to be adjusted.

In an embodiment, as shown in FIG. 3, each AC-DC circuit of the one or more bidirectional AC-DC circuits 301 and the one or more unidirectional AC-DC circuits 303 is correspondingly connected to one controller 309, and a controller 309 connected to one of the one or more bidirectional AC-DC circuits 301 is configured to control at least one of the one or more bidirectional AC-DC circuits 301 to work. The controller 309 connected to the one of the bidirectional AC-DC circuits 301 is further configured to receive a power parameter, where the power parameter includes at least one of the following: a reactive power of each AC-DC circuit of the one or more bidirectional AC-DC circuits 301 and the one or more unidirectional AC-DC circuits 303, an input voltage and an input current of each AC-DC circuit of the one or more bidirectional AC-DC circuits 301 and the one or more unidirectional AC-DC circuits 303, a reactive power of an alternating current input into the charging device 30, an input voltage of the one of the bidirectional AC-DC circuits 301, and a sum of input currents of all the AC-DC circuits of the one or more bidirectional AC-DC circuits 301 and the one or more unidirectional AC-DC circuits 303.

That is, when reactive power compensation or power factor adjustment is performed on the charging device 30, the controller 309 connected to the one of the bidirectional AC-DC circuits 301 may control working statuses of all the bidirectional AC-DC circuits 301.

Generally, the charging device 30 includes a main controller 311. The main controller 311 sends, based on charging information of the electric vehicle, a control command to the controllers 309 connected to the bidirectional AC-DC circuit 301 and the unidirectional AC-DC circuit 303, so that the controllers 309 connected to the bidirectional AC-DC circuit 301 and the unidirectional AC-DC circuit 303 control, according to the control command, the AC-DC circuits to work, to charge the electric vehicle.

The controller 309 connected to the one of the bidirectional AC-DC circuits 301 is used to receive the power parameter and perform reactive power compensation or power factor adjustment, so that complexity of cooperation between the main controller 311 and the controller 309 connected to each AC-DC circuit can be reduced. In addition, the AC-DC circuit and the controller 309 connected to the AC-DC circuit are generally integrated in an AC-DC module. If reactive power compensation control or power factor adjustment is performed by the main controller 311, subsequent commissioning needs to be performed between the controller 309 (that is, the controller connected to the AC-DC circuit) in the AC-DC module and the main controller 311 after delivery of AC-DC module. This increases integration complexity and development costs of the charging device 30. According to the solution in this embodiment, a reactive power compensation function and a power factor adjustment function may be commissioned before delivery of the AC-DC module, so that the integration complexity and the development costs of the charging device 30 are reduced.

Still refer to FIG. 3. In an embodiment, the charging device 30 further includes a main controller 311 and a communication bus 313. The main controller 311 is connected to the controller 309 connected to each AC-DC circuit through the communication bus 313, the controller 309 connected to each AC-DC circuit communicates with the main controller 311 through the communication bus 313, and the controllers 309 connected to the AC-DC circuits further communicate with each other through the communication bus 313.

The main controller 311 communicates with the controller 309 connected to each AC-DC circuit through the communication bus 313. The main controller 311 sends, based on charging information of the electric vehicle, a control command to the controllers 309 connected to the bidirectional AC-DC circuit 301 and the unidirectional AC-DC circuit 303, so that the controllers 309 connected to the bidirectional AC-DC circuit 301 and the unidirectional AC-DC circuit 303 control, according to the control command, the AC-DC circuits to work, to charge the electric vehicle. The controller 309 connected to each AC-DC circuit is also connected to the communication bus 313, so that communication between the controllers 309 can be implemented through the communication bus 313.

In an embodiment, the controller 309 connected to the one of the bidirectional AC-DC circuits 301 may obtain an input voltage and an input current of each AC-DC circuit of the one or more bidirectional AC-DC circuits 301 except the one of the bidirectional AC-DC circuits 301, and calculate a reactive power of each AC-DC circuit based on an input voltage and an input current of the one of the bidirectional AC-DC circuits 301 and the input voltage and the input current of each AC-DC circuit except the one of the bidirectional AC-DC circuits 301. Therefore, a total reactive power of the charging device 30 is obtained, and at least one bidirectional AC-DC circuit 301 is controlled, based on the total reactive power, to work, to perform reactive power compensation on the charging device 30.

In another embodiment, the controller 309 connected to the one of the bidirectional AC-DC circuits 301 may obtain a reactive power of each AC-DC circuit of the one or more bidirectional AC-DC circuits 301 except the one of the bidirectional AC-DC circuits 301, so that a total reactive power of the charging device 30 is obtained, and at least one bidirectional AC-DC circuit 301 is controlled, based on the total reactive power, to work, to perform reactive power compensation on the charging device 30. The controller 309 connected to each AC-DC circuit of the one or more bidirectional AC-DC circuits 301 except the one of the bidirectional AC-DC circuits 301 may obtain an input voltage and an input current of the AC-DC circuit to which the controller 309 is connected, calculate a reactive power based on the input voltage and the input current, and send the reactive power to the one of the bidirectional AC-DC circuits 301. The controller 309 connected to the one of the bidirectional AC-DC circuits 301 may obtain an input voltage and an input current of the one of the bidirectional AC-DC circuits 301, so that a reactive power of the one of the bidirectional AC-DC circuits 301 may be obtained, and then a total reactive power of the charging device 30 may be obtained.

When the charging device 30 charges the electric vehicle, to ensure charging safety of the charging device 30, a voltage monitoring apparatus and a current monitoring apparatus generally need to be disposed in the charging device 30 to monitor an input voltage and an input current of the AC-DC circuit. In the foregoing two embodiments, the input voltage and the input current that are detected by the voltage monitoring apparatus and the current monitoring apparatus may be reused to perform reactive power calculation at the same time, and no additional device is required. This reduces the costs of the charging device 30.

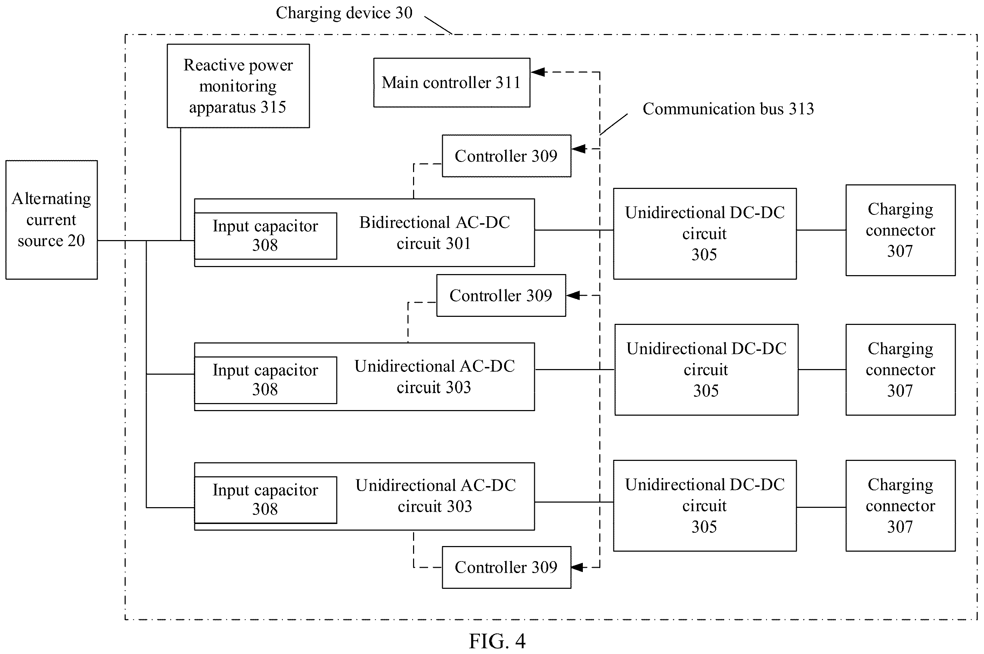

FIG. 4 is a diagram of another structure of the charging device 30 according to this application. The charging device 30 includes a reactive power monitoring apparatus 315. The reactive power monitoring apparatus 315 is configured to monitor a reactive power of the charging device 30. The controller 309 connected to the one of the bidirectional AC-DC circuits 301 may obtain the reactive power of the charging device 30, and control, based on the reactive power of the charging device 30, at least one bidirectional AC-DC circuit 301 to work, to perform reactive power compensation on the charging device 30.

During specific implementation, the reactive power monitoring apparatus 315 may be a meter or a power sensor. This is not limited in this application.

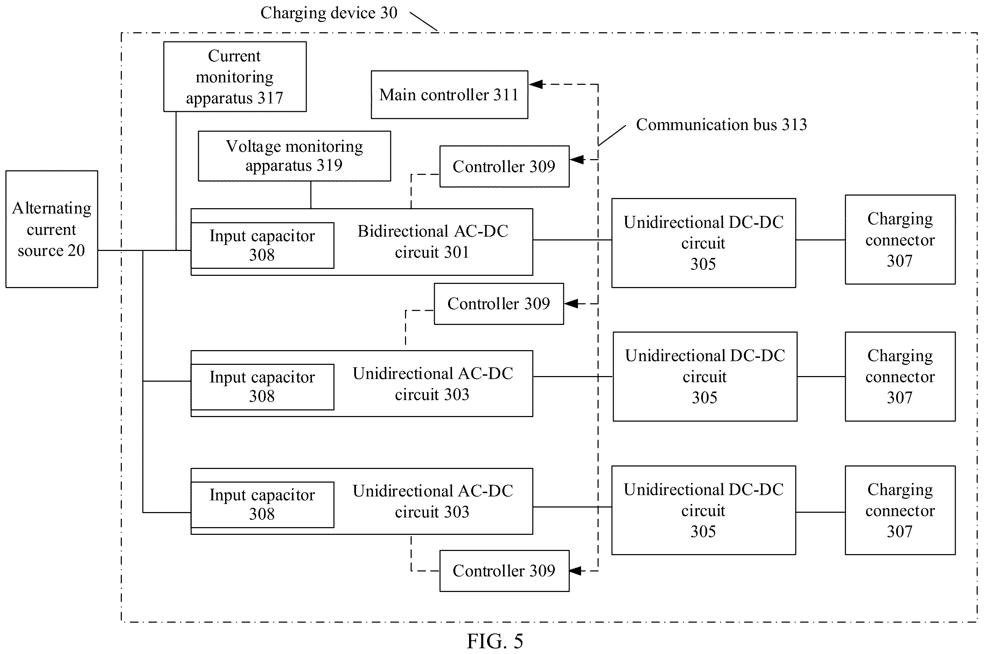

FIG. 5 is a diagram of still another structure of the charging device 30 according to this application. The charging device 30 includes a current monitoring apparatus 317 and a voltage monitoring apparatus 319. The current monitoring apparatus 317 is configured to monitor a total current input to all AC-DC circuits of the one or more bidirectional AC-DC circuits 301 and the one or more unidirectional AC-DC circuits 303. The voltage monitoring apparatus 319 is configured to monitor an input voltage of the one of the bidirectional AC-DC circuits 301.

It may be learned from FIG. 5 that all AC-DC circuits are connected to the alternating current source 20 in parallel. Therefore, an input voltage of one bidirectional AC-DC circuit 301 is an input voltage of the charging device 30. Therefore, the total reactive power of the charging device 30 may be calculated by detecting the total current input to all the AC-DC circuits and the input voltage input to one bidirectional AC-DC circuit 301.

Still refer to FIG. 4 and FIG. 5. In an embodiment, when the charging device 30 includes only one bidirectional AC-DC circuit 301, a controller 309 connected to the bidirectional AC-DC circuit 301 only needs to establish a communication connection with the reactive power monitoring apparatus 315 or the current monitoring apparatus 317, and does not need to establish a communication connection with the controllers 309 connected to the other unidirectional AC-DC circuits 303. This can reduce connection complexity of the charging device 30.

In an embodiment, when the charging device 30 includes a plurality of bidirectional AC-DC circuits 301, a controller 309 connected to one of the plurality of bidirectional AC-DC circuits 301 establishes a communication connection with the reactive power monitoring apparatus 315 or the current monitoring apparatus 317. In addition, when reactive power compensation or power factor adjustment is performed on the charging device 30, the controller 309 connected to the one of the bidirectional AC-DC circuits 301 is configured to control working statuses of the plurality of bidirectional AC-DC circuits 301.

In an embodiment, when the charging device 30 includes a plurality of bidirectional AC-DC circuits 301, a controller 309 connected to a first bidirectional AC-DC circuit 301 of the plurality of bidirectional AC-DC circuits 301 establishes a communication connection with the reactive power monitoring apparatus 315 or the current monitoring apparatus 317. In addition, a controller 309 connected to each bidirectional AC-DC circuit 301 establishes a communication connection through the communication bus 313. When reactive power compensation or power factor adjustment is performed on the charging device 30, a controller 309 connected to a second bidirectional AC-DC circuit 301 is configured to control working statuses of the plurality of bidirectional AC-DC circuits 301.

It should be noted that, the first bidirectional AC-DC circuit 301 and the second bidirectional AC-DC circuit 301 may be a same bidirectional AC-DC circuit, or may be different AC-DC circuits. A specific implementation is described below.

Refer to FIG. 3, FIG. 4, and FIG. 5 together. In the foregoing plurality of embodiments, for ease of description, when the charging device 30 includes a plurality of bidirectional AC-DC circuits 301, a controller 309 that is connected to one of the bidirectional AC-DC circuits 301 and that is configured to control working statuses of all the bidirectional AC-DC circuits 301 is referred to as a circuit main controller 309.

In an embodiment, when reactive power compensation or power factor adjustment is performed on the charging device 30, the controller 309 connected to each bidirectional AC-DC circuit 301 contends for mastership through the communication bus 313, with one being elected as the circuit main controller 309. For example, the controller 309 connected to each bidirectional AC-DC circuit 301 obtains, through the communication bus 313, address numbers or serial numbers sent by the controllers 309 connected to the other bidirectional AC-DC circuits 301, and a controller 309 corresponding to a smallest address number or a smallest serial number is used as the circuit main controller 309. In this embodiment, with reference to FIG. 4 and FIG. 5, the controller 309 connected to the second bidirectional AC-DC circuit 301 is the circuit main controller 309. The second bidirectional AC-DC circuit 301 may or may not be identical to the first bidirectional AC-DC circuit 301. This depends on a final result of contention by the controller 309 connected to each bidirectional AC-DC circuit 301 through the communication bus 313. The first bidirectional AC-DC circuit 301 obtains a monitoring result of the reactive power monitoring apparatus 315 or a monitoring result of the current monitoring apparatus 317, and sends the monitoring result to the communication bus 313. When the circuit main controller 309 is not the controller 309 connected to the first bidirectional AC-DC circuit, the circuit main controller 309 obtains the monitoring result through the communication bus 313, and performs reactive power compensation or active power adjustment.

A solution of selecting a circuit main controller through a contention mechanism can reduce dependence on a specific controller 309, thereby improving working stability of the charging device 30. For example, when the controller 309 connected to one bidirectional AC-DC circuit is faulty, the controllers 309 connected to the other bidirectional AC-DC circuits may still select a circuit main controller through the contention mechanism, so that reactive power compensation or power adjustment may continue to be performed on the charging device 30, thereby improving the working stability of the charging device 30.

In an embodiment, in the plurality of controllers 309 connected to the plurality of bidirectional AC-DC circuits 301, the circuit main controller 309 is preset in advance. In this embodiment, with reference to FIG. 4 and FIG. 5, the circuit main controller 309 establishes a communication connection with the reactive power monitoring apparatus 315 or the current monitoring apparatus 317. In addition, when reactive power compensation or power factor adjustment is performed on the charging device 30, the circuit main controller 309 is configured to control the working statuses of the plurality of bidirectional AC-DC circuits 301.

Compared with the solution of selecting a circuit main controller through the contention mechanism, the solution of presetting a circuit main controller in advance can reduce communication complexity of the charging device 30.

In the foregoing embodiments, when reactive power compensation or power adjustment is performed on the charging device 30, an example in which a controller connected to one of the bidirectional AC-DC circuits controls working statuses of all the bidirectional AC-DC circuits is used for description. It may be understood that, when reactive power compensation or power factor adjustment needs to be performed on the charging device 30, the main controller 311 may alternatively control the working statuses of the bidirectional AC-DC circuits, to enable the reactive power compensation function or the power factor adjustment function. That is, the main controller 311 may receive the foregoing power parameter, and control the working statuses of the bidirectional AC-DC circuits 301 based on the power parameter.

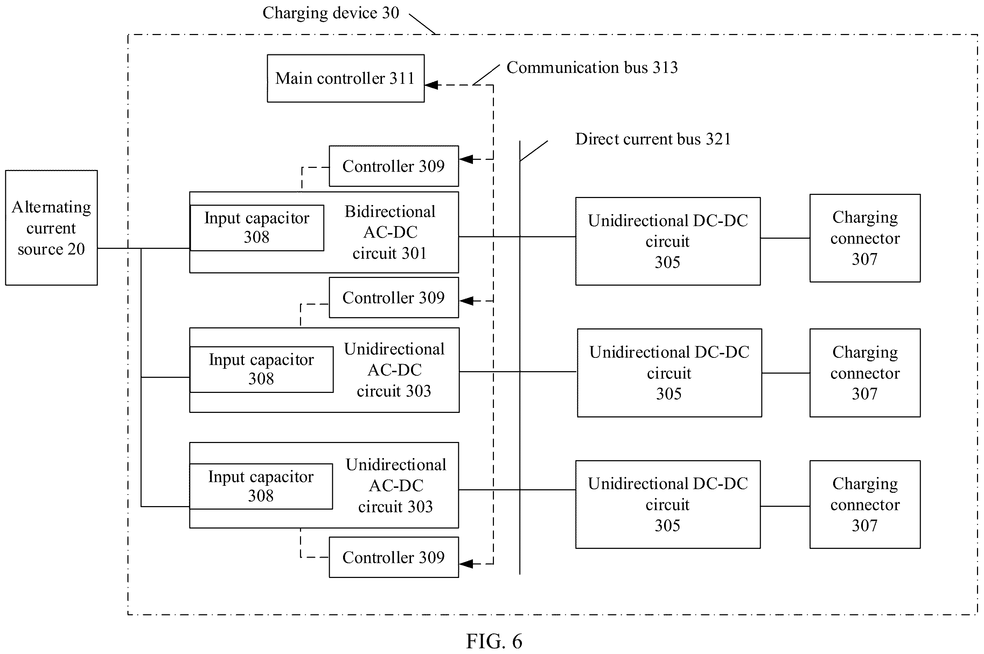

FIG. 6 is a diagram of yet another structure of the charging device 30 according to an embodiment of this application. The charging device 30 further includes a direct current bus 321, and each AC-DC circuit of the one or more bidirectional AC-DC circuits 301 and the one or more unidirectional AC-DC circuits 303 is connected to each of the plurality of unidirectional DC-DC circuits 305 through the direct current bus 321.

When the charging device 30 includes the direct current bus 321, in an embodiment, one bidirectional AC-DC circuit 301 and a controller 309 connected to the bidirectional AC-DC circuit 301 may be packaged in a housing to form a bidirectional AC-DC module. In an embodiment, one unidirectional AC-DC circuit 303 and a controller 309 connected to the unidirectional AC-DC circuit 303 may be packaged in a housing to form a unidirectional AC-DC module. In an embodiment, one unidirectional DC-DC circuit 305 and a controller (not shown in FIG. 5) connected to the unidirectional DC-DC circuit 305 may be packaged in a housing to form a unidirectional DC-DC module. In an embodiment, two unidirectional DC-DC circuits 305 and controllers (not shown in FIG. 5) connected to the two unidirectional DC-DC circuits 305 may be packaged in a housing to form a unidirectional DC-DC module. A quantity of circuits packaged in a housing is not limited in this application.

When the charging device 30 does not include the direct current bus 321, with reference to FIG. 3, FIG. 4, and FIG. 5, in an embodiment, one bidirectional AC-DC circuit 301 is connected to one unidirectional DC-DC circuit 305, and the bidirectional AC-DC circuit 301 and the unidirectional DC-DC circuit 305 that are connected are packaged in a housing to form an AC-DC module. In an embodiment, one unidirectional AC-DC circuit 303 is connected to one unidirectional DC-DC circuit 305, and the unidirectional AC-DC circuit 303 and the unidirectional DC-DC circuit 305 are packaged in a housing to form an AC-DC module. In an embodiment, one bidirectional AC-DC circuit 301 is connected to two unidirectional DC-DC circuits 305, and the bidirectional AC-DC circuit 301 and the two unidirectional DC-DC circuits 305 are packaged in a housing to form an AC-DC module. A correspondence between a quantity of AC-DC circuits and a quantity of DC-DC circuits that are packaged in a housing is not limited in this application.

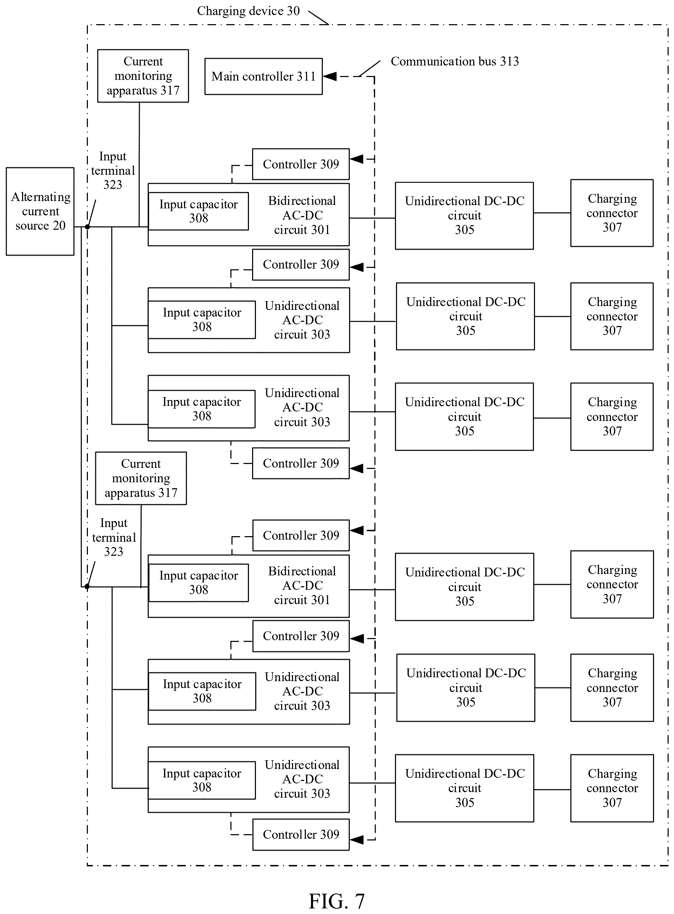

FIG. 7 is a diagram of still yet another structure of the charging device 30 according to an embodiment of this application. The charging device 30 includes a plurality of groups of input terminals 323 and a plurality of groups of power conversion circuits. Each group of power conversion circuits includes the one or more bidirectional AC-DC circuits 301, the one or more unidirectional AC-DC circuits 303, and the plurality of unidirectional DC-DC circuits 305. The plurality of groups of input terminals 323 are configured to connect to the same alternating current source 20, and the plurality of groups of input terminals 323 are connected to the plurality of groups of power conversion circuits in a one-to-one correspondence.

In an embodiment, the charging device includes a current monitoring apparatus 317. When an input current of the charging device 30 is large, specification requirements on the current monitoring apparatus 317 are also high. This is not conducive to selection of the current monitoring apparatus 317, and causes high costs of the charging device 30.

In the technical solution provided in this application, a plurality of groups of power conversion circuits may be disposed in the charging device 30. In this way, the current monitoring apparatus 317 configured to monitor an input current of each group of power conversion circuits has low specifications. This facilitates selection of the current monitoring apparatus 317, and further reduces the costs of the charging device 30.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, wherein the charging device comprises one or more bidirectional AC-DC circuits, one or more unidirectional AC-DC circuits, a plurality of unidirectional DC-DC circuits, and one or more charging connectors, each AC-DC circuit of the one or more bidirectional AC-DC circuits and the one or more unidirectional AC-DC circuits comprises an input capacitor, each AC-DC circuit is configured to connect to a same alternating current source through the input capacitor, each of the one or more charging connectors is configured to connect to an electric vehicle, and each of the plurality of unidirectional DC-DC circuits is configured to: perform power conversion on a direct current output from at least one AC-DC circuit of the one or more bidirectional AC-DC circuits and the one or more unidirectional AC-DC circuits, and then output the converted direct current to one of the one or more charging connectors, wherein
the charging device is configured to: when none of the charging connectors is connected to the electric vehicle, control the one or more unidirectional AC-DC circuits and the plurality of unidirectional DC-DC circuits not to work, and control at least one of the one or more bidirectional AC-DC circuits to work.

2. The charging device according to claim 1, wherein each AC-DC circuit is correspondingly connected to one controller, a controller connected to one of the one or more bidirectional AC-DC circuits is configured to control at least one of the one or more bidirectional AC-DC circuits to work, and the controller connected to the one of the bidirectional AC-DC circuits is further configured to receive a power parameter, wherein the power parameter comprises at least one of the following:
a reactive power of each AC-DC circuit of the one or more bidirectional AC-DC circuits except the one of the bidirectional AC-DC circuits, an input voltage and an input current of each AC-DC circuit of the one or more bidirectional AC-DC circuits except the one of the bidirectional AC-DC circuits, a reactive power of an alternating current input into the charging device, an input voltage of the one of the bidirectional AC-DC circuits, and a sum of input currents of all the AC-DC circuits.

3. The charging device according to claim 1 or 2, wherein the charging device further comprises a main controller and a communication bus, the main controller is connected to the controller connected to each AC-DC circuit through the communication bus, the controller connected to each AC-DC circuit communicates with the main controller through the communication bus, and the controllers of the AC-DC circuits further communicate with each other through the communication bus.

4. The charging device according to claim 2 or 3, wherein the charging device further comprises a reactive power monitoring apparatus, and the reactive power monitoring apparatus is configured to monitor the reactive power of the alternating current input into the charging device.

5. The charging device according to claim 2 or 3, wherein the charging device further comprises a current monitoring apparatus and a voltage monitoring apparatus, the voltage monitoring apparatus is configured to monitor the input voltage of the one of the bidirectional AC-DC circuits, and the current monitoring apparatus is configured to monitor the sum of the input currents of all the AC-DC circuits.

6. The charging device according to any one of claims 1 to 5, wherein the charging device is further configured to: when the charging connector outputs a charging current, and a power factor of the charging device is less than a first preset value, adjust a frequency or a duty cycle of a switching transistor of at least one of bidirectional AC-DC circuits that are working, or control at least one of bidirectional AC-DC circuits that are not working to work, wherein Power factor of the charging device = Active power of the charging device/Apparent power of the charging device.

7. The charging device according to claim 6, wherein the first preset value is greater than or equal to 0.9 and less than or equal to 0.95.

8. The charging device according to any one of claims 1 to 7, wherein the charging device is configured to: when none of the charging connectors is connected to the electric vehicle, and the reactive power of the charging device is greater than a second preset value, control the one or more unidirectional AC-DC circuits and the plurality of unidirectional DC-DC circuits not to work, and control at least one of the one or more bidirectional AC-DC circuits to work.

9. The charging device according to claim 8, wherein the second preset value is greater than or equal to 500 VA and less than or equal to 1000 VA.

10. The charging device according to claims 1 to 9, wherein the charging device comprises a plurality of groups of input terminals and a plurality of groups of power conversion circuits, each group of power conversion circuits comprises the one or more bidirectional AC-DC circuits, the one or more unidirectional AC-DC circuits, and the plurality of unidirectional DC-DC circuits, the plurality of groups of input terminals are configured to connect to the same alternating current source, and the plurality of groups of input terminals are connected to the plurality of groups of power conversion circuits in a one-to-one correspondence.
